(19) Europäisches Patentamt
European Patent Office
Office européen des brevets

(11) **EP 4 599 983 A1**

(12) **EUROPEAN PATENT APPLICATION**
published in accordance with Art. 153(4) EPC

(43) Date of publication:
**13.08.2025 Bulletin 2025/33**

(21) Application number: **23894245.2**

(22) Date of filing: **20.09.2023**

(51) International Patent Classification (IPC):
**B24B 27/033** (2006.01)    **B24B 27/00** (2006.01)
**B24B 49/16** (2006.01)    **B25J 9/10** (2006.01)
**B25J 13/08** (2006.01)

(52) Cooperative Patent Classification (CPC):
**B24B 27/00; B24B 27/033; B24B 49/16;
B25J 9/10; B25J 13/08**

(86) International application number:
**PCT/JP2023/034147**

(87) International publication number:
**WO 2024/111233 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 JP 2022188541**

(71) Applicant: **JFE Steel Corporation
Tokyo 100-0011 (JP)**

(72) Inventors:
• **WATANABE, Taku
Tokyo 100-0011 (JP)**
• **HARADA, Junji
Tokyo 100-0011 (JP)**
• **SUMIYA, Takuma
Tokyo 100-0011 (JP)**

(74) Representative: **Hoffmann Eitle
Patent- und Rechtsanwälte PartmbB
Arabellastraße 30
81925 München (DE)**

(54) **GRINDING SYSTEM, TRACK GENERATION METHOD, AND PRODUCT MANUFACTURING METHOD**

(57)    A grinding system 1 comprises: a grinding device 10 including a grinding tool 22 grinding a target material 80; a pressing force measurement device 14 that measures a grinding pressing force acting on the target material 80 from the grinding tool 22; and a control device 12 that generates, based on a three-dimensional shape of a surface of the target material 80 and a position and shape of a removal target 82 in the target material 80, a trajectory of the grinding tool 22 for grinding out the removal target 82, and controls the grinding device 10 to move the grinding tool 22 based on the trajectory. The control device 12 generates the trajectory so that at least one of a movement velocity of the grinding tool 22 relative to the target material 80 or the grinding pressing force will change depending on a position of the grinding tool 22.

*FIG. 4*

**Description**

TECHNICAL FIELD

The present disclosure relates to a grinding system that grinds out removal targets such as defects on the surface of a target material such as a steel product, a trajectory generation method, and a product manufacturing method.

BACKGROUND

For example, in a manufacturing process of steel products or the like, surface defects occur due to various factors during casting or rolling. Surface defects are removed by an operator grinding out the defective parts with a grinder. However, grinding work using a grinder involves various risks, such as a rotating body being present very close to the operator, the operator being exposed to sparks, dust, or noise, and the operator contracting white finger disease due to vibration during grinding. There is a shortage of manpower to carry out risky work. There is also a need to avoid risky work. Automation of defect grinding work is required from the viewpoint of labor saving and safety.

Various methods have been conventionally proposed to automate defect grinding work. With conventional methods, there is a problem in that steps (i.e. level differences) occur at the boundaries between the ground and unground parts of the object when the defect is ground out. The steps at the boundaries between the ground and unground parts adversely affect the appearance of the product. The steps at the boundaries between the ground and unground parts also cause abrupt changes in the dimensions of the product surface. Such abrupt changes in the dimensions of the product surface may cause the product to crack when a large force is applied to the product or additional work is performed on the product.

For example, Patent Literature (PTL) 1 discloses a method of changing the contact area of a grinding wheel by periodically varying the contact angle during reciprocating motion in the feed direction of a grinder so as to reduce the steps at the boundaries between the ground and unground parts.

CITATION LIST

Patent Literature

PTL 1: JP H7-100759 A

SUMMARY

(Technical Problem)

Even with the method disclosed in PTL 1, a step occurs due to an overshoot when the grinding wheel of the grinder comes into contact with the target material to be ground or when the grinding wheel separates from the target material. In the case of grinding while maintaining the contact force or pressing force of the grinding wheel constant using a force sensor, in order to reduce the overshoot upon contact or separation of the grinding wheel, the measurement results of the force sensor need to be reflected in the calculation of the trajectory of the grinding wheel while increasing the response speed of the control system,. This increases the costs of the control device or system. In addition, tuning the control system so as to handle various steel types or grinding conditions takes a lot of time.

It could therefore be helpful to provide a grinding system, trajectory generation method, and product manufacturing method that can reduce steps caused when grinding out a removal target in a three-dimensional target material to be ground such as a steel product.

(Solution to Problem)

A grinding system according to one embodiment of the present disclosure comprises: a grinding device including a grinding tool configured to grind a target material; a pressing force measurement device configured to measure a grinding pressing force acting on the target material from the grinding tool; and a control device configured to generate, based on a three-dimensional shape of a surface of the target material and a position and shape of a removal target in the target material, a trajectory of the grinding tool for grinding out the removal target, and control the grinding device to move the grinding tool based on the trajectory. The control device is configured to generate the trajectory so that at least one of a movement velocity of the grinding tool relative to the target material or the grinding pressing force will change depending on a position of the grinding tool.

A trajectory generation method according to one embodiment of the present disclosure is a trajectory generation method of generating a trajectory for controlling a grinding tool that grinds a target material, the trajectory generation method comprising: measuring a three-dimensional shape of a surface of the target material; recognizing a position and shape of a removal target in the target material; and generating the trajectory so that at least one of a velocity of the grinding tool relative to the target material or a grinding pressing force acting on the target material from the grinding tool will change depending on a position of the grinding tool, based on the three-dimensional shape and a posture of the target material and the position and shape of the removal target.

A product manufacturing method according to one embodiment of the present disclosure comprises grinding out a removal target in a target material by controlling a grinding tool based on a trajectory generated by executing the above-described trajectory generation method.

(Advantageous Effect)

It is thus possible to provide a grinding system, trajectory generation method, and product manufacturing method that can reduce steps caused by grinding.

BRIEF DESCRIPTION OF THE DRAWINGS

In the accompanying drawings:

FIG. 1 is a diagram illustrating an example of the structure of a grinding system according to the present disclosure;
FIG. 2 is a side view illustrating an example of a grinding device;
FIG. 3 is a view taken along arrow A in FIG. 2;
FIG. 4 is a diagram illustrating an example of the trajectory of a grinding tool when grinding an object;
FIG. 5 is a diagram illustrating an example of the trajectory of the grinding tool when approaching the object;
FIG. 6 is a diagram illustrating an example of the trajectory of the grinding tool when leaving the object;
FIG. 7 is a graph illustrating an example of the relationship between the position of the grinding tool and the velocity of the grinding tool at each position;
FIG. 8 is a graph illustrating an example of the relationship between the position of the grinding tool and the grinding pressing force at each position;
FIG. 9 is a flowchart illustrating an example of the procedure of a grinding method according to an embodiment; and
FIG. 10 is a graph illustrating an example of the relationship between the position of the grinding tool in the feed direction and the grinding depth of the object at each position, obtained by the grinding method according to the embodiment.

DETAILED DESCRIPTION

An embodiment of a grinding system, trajectory generation method, and product manufacturing method according to the present disclosure will be described below with reference to the drawings. The drawings are schematic and may be different from actual ones. The following embodiment is illustrative of a device or method for embodying the technical idea of the present disclosure, but is not intended to limit the configuration to those described below. That is, various modifications can be made to the technical idea of the present disclosure within the technical scope defined by the claims.

(Example of structure of grinding system 1)

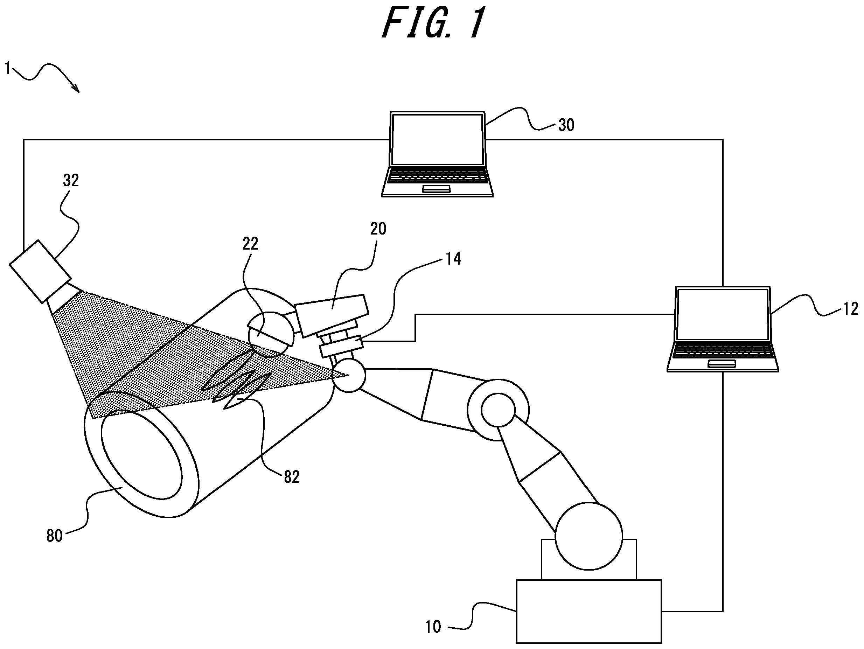

As illustrated in FIG. 1, a grinding system 1 according to one embodiment of the present disclosure includes a grinding device 10, a control device 12, a pressing force measurement device 14, a shape measurement device 32, and a removal target recognition device 30. The grinding system 1 grinds a target material 80 to be ground by the grinding device 10 to remove a removal target 82 contained in the target material 80. An example of each component of the grinding system 1 will be described below.

<Grinding device 10>

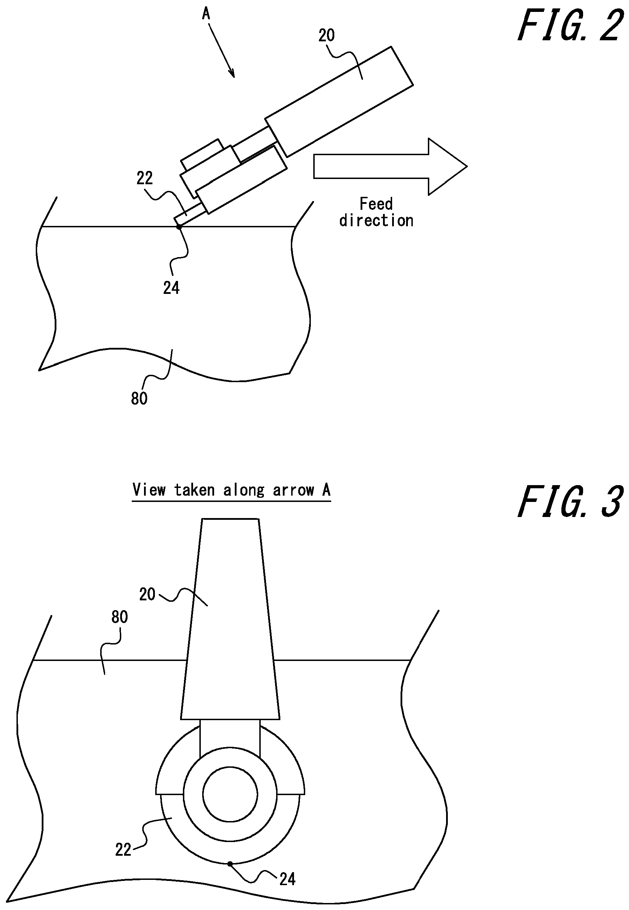

As illustrated in FIGS. 1, 2, and 3, the grinding device 10 includes a grinding wheel 22 and a grinder 20 that rotates the grinding wheel 22. The grinding wheel 22 has a disc shape. The grinder 20 rotates the grinding wheel 22 around an axis perpendicular to the paper surface of FIG. 3 as a rotation axis. The point at which the grinding wheel 22 contacts the target material 80 is also referred to as a processing reference point 24. The grinding device 10 grinds the surface of the target material 80 at the processing reference point 24. The grinding device 10 can grind the surface of the target material 80 planarly by grinding the surface of the target material 80 while moving the processing reference point 24. The grinding device 10 controls the posture of the grinding wheel 22 so that the processing reference point 24 will be located behind the grinding wheel 22 in the feed direction of the grinding wheel 22. In other words, the grinding device 10 controls the posture of the grinding wheel 22 so that the angle between the plane of the grinding wheel 22 parallel to the paper surface of FIG. 3 and the feed direction of the grinding wheel 22 will be an acute angle.

The grinding wheel 22 and the grinder 20 are also referred to as a grinding tool. The grinding device 10 includes the grinding tool. The grinding tool is not limited to a combination of the grinding wheel 22 and the grinder 20. The grinding tool may include devices having various other structures or shapes as long as it is capable of grinding the target material 80.

The grinding device 10 includes a grinding tool moving means to enable controlling the position of the processing reference point 24 and the posture of the grinding tool at the processing reference point 24. The grinding device 10 may include an robot arm as the grinding tool moving means. The grinding tool may be installed at the tip or an intermediate part of the robot arm. The robot arm may be, for example, a multi-axis robot. For example, the multi-axis robot may have six axes (rotation axes) and have degrees of freedom in six axial directions. The multi-axis robot may have degrees of freedom of movement in at least three axial directions. The multi-axis robot may be a vertical articulated robot.

The grinding tool moving means is not limited to a robot arm. The grinding tool moving means may include devices having various other structures or shapes as long as it is capable of controlling the position of the processing reference point 24 and the posture of the grinding tool at the processing reference point 24.

<Control device 12>

The control device 12 controls the grinding device 10 to grind out to remove the removal target 82 contained on the surface of the target material 80 based on information acquired from the shape measurement device 32, the removal target recognition device 30, or the pressing force measurement device 14. The control device 12 may also control the shape measurement device 32, the removal target recognition device 30, or the pressing force measurement device 14. The control device 12 may include at least one processor such as a central processing unit (CPU) or a graphics processing unit (GPU) to enable controlling each component of the grinding system 1. The control device 12 may be composed of one processor or a plurality of processors. The processor (or processors, the same applies hereafter) included in the control device 12 may control each component of the grinding system 1 by reading and executing a program stored in a storage unit described later.

The control device 12 may include a storage unit. The storage unit stores various information or data. The storage unit may store, for example, the program executed by the control device 12, data used in the processes executed by the control device 12, the results of the processes, etc. The storage unit may function as work memory for the control device 12. The storage unit may include semiconductor memory or the like, but is not limited to such. For example, the storage unit may be implemented as internal memory of the processor used as the control device 12, or implemented as a hard disk drive (HDD) accessible from the control device 12. The storage unit may be implemented as a non-transitory readable medium. The storage unit may be integral with or separate from the control device 12.

The control device 12 may include a communication unit. The communication unit may include a communication interface for communicating with each component of the grinding system 1, such as the grinding device 10, the shape measurement device 32, the removal target recognition device 30, and the pressing force measurement device 14, by wire or wirelessly. The communication interface may be capable of communicating with other devices. The communication unit may include input-output ports for input and output of data from and to each component of the grinding system 1 or other devices. The communication unit may transmit and receive necessary data and signals to and from each component of the grinding system 1 or other devices. The communication unit may communicate based on a wired communication standard or a wireless communication standard. Examples of the wireless communication standard include cellular phone communication standards such as 3G, 4G, and 5G. Other examples of the wireless communication standard include IEEE 802.11 and Bluetooth® (Bluetooth is a registered trademark in Japan, other countries, or both). The communication unit may support one or more of these communication standards. The communication unit is not limited to these examples, and may communicate with other devices and input/output data based on any of various standards.

<Pressing force measurement device 14>

The pressing force measurement device 14 measures the pressing force acting on the target material 80 from the grinding tool when the target material 80 to be ground is ground with the grinding tool. The pressing force acting on the target material 80 from the grinding tool is balanced with the reaction force acting on the grinding tool from the target material 80. The pressing force measurement device 14 may include any of various sensors such as a torque sensor and a pressure sensor.

<Shape measurement device 32>

The shape measurement device 32 measures the three-dimensional shape of the surface of the target material 80 to be ground. The shape measurement device 32 may include a camera that photographs the target material 80. The shape measurement device 32 may output a captured image of the target material 80 as the measurement result of the three-dimensional shape of the surface of the target material 80.

The shape measurement device 32 may calculate the three-dimensional shape of the surface of the target material 80 as point cloud information that is a set of three-dimensional coordinates of points on the surface of the target material 80, and output the point cloud information as the measurement result of the three-dimensional shape of the surface of the target material 80. For example, the shape measurement device 32 may include a depth camera that measures the distance to each point on the surface of the target material 80. The shape measurement device 32 may measure the three-dimensional coordinates of each point on the surface of the target material 80 based on the measurement results of the depth camera. The shape measurement device 32 may be configured to measure the three-dimensional coordinates of each point on the surface of the target material 80, for example, by causing a probe to contact the surface of the target material 80. The shape measurement device 32 may be configured to measure the three-dimensional coordinates of each point on the surface of the target material 80, for example, by irradiating the target material 80 with laser light or the like and detecting the reflected light.

<Removal target recognition device 30>

The removal target recognition device 30 recognizes the position and shape of the removal target 82 to be removed on the surface of the target material 80 based on the measurement result of the three-dimensional shape of the surface of the target material 80. The removal target 82 may include, for example, a protruding part on the surface of the target material 80. The removal target recognition device 30 may recognize the position and shape of the removal target 82 contained as a protruding part on the surface of the target material 80, by comparing the measurement result of the three-dimensional shape of the surface of the target material 80 with normal three-dimensional shape data. The removal target 82 may include, for example, a recessed part on the surface of the target material 80. The removal target 82 may include surface defects such as dirt and rust that do not cause a change in the shape of the surface of the target material 80. The removal target 82 is not limited to the above examples and may include various parts of the target material 80 that need to be removed.

The removal target recognition device 30 may be part of the control device 12. In other words, the control device 12 may acquire data of the three-dimensional shape of the surface of the target material 80 from the shape measurement device 32 and recognize the position and shape of the removal target 82.

(Example of operation of grinding system 1)

In the grinding system 1, the shape measurement device 32 measures the three-dimensional shape of the surface of the target material 80 to be ground. The measurement data of the three-dimensional shape of the surface of the target material 80 may include, for example, the dimensions or posture of the target material 80. The measurement data of the three-dimensional shape of the surface of the target material 80 may be acquired as an image. The removal target recognition device 30 recognizes the removal target 82 contained on the surface of the target material 80 based on the measurement data of the three-dimensional shape of the surface of the target material 80. The removal target recognition device 30 may recognize the position, shape, or dimensions of the removal target 82. The control device 12 controls the grinding device 10 based on the recognition result of the removal target 82 to grind out and remove the removal target 82 by the grinding tool. An example of the operation of the grinding system 1 will be described below. The removal target 82 is assumed to be a protruding part on the surface of the target material 80.

The control device 12 may operate the grinding device 10 to grind the surface of the target material 80 for a predetermined time, in order to remove the removal target 82 contained on the surface of the target material 80. The control device 12 may operate the grinding device 10 to grind the surface of the target material 80 by a predetermined grinding amount.

Specifically, the control device 12 performs inverse kinematic calculations based on the position and either shape or dimensions of the removal target 82 recognized by the removal target recognition device 30, and generates a trajectory for operating the grinding device 10 to press the grinding wheel 22 at the position of the removal target 82 and grind out the removal target 82. The control device 12 controls the grinding device 10 to move the grinding tool based on the generated trajectory.

The trajectory includes information specifying the movement path of the processing reference point 24 of the grinding wheel 22. The trajectory may specify the movement path of the processing reference point 24 by including information specifying the movement velocity of the processing reference point 24. The movement velocity of the processing reference point 24 may be represented by a function with time as a parameter. In the case where the movement velocity of the processing reference point 24 is represented by a function with time as a parameter, the movement path of the processing reference point 24 is generated by integrating the function with respect to time.

The trajectory may include information specifying the pressing force acting on the target material 80 from the grinding wheel 22 at each position on the movement path of the processing reference point 24. The pressing force acting on the target material 80 from the grinding wheel 22 may be represented by a function with time as a parameter.

The control device 12 may generate the trajectory so that at least one of the movement velocity of the grinding tool relative to the target material 80 or the pressing force acting on the target material 80 from the grinding tool will change depending on the position of the grinding tool. The control device 12 may generate the trajectory so that both the movement velocity of the grinding tool relative to the target material 80 and the pressing force acting on the target material 80 from the grinding tool will change depending on the position of the grinding tool. When the movement velocity of the grinding tool is faster, the time during which the grinding tool stays at the position is shorter. Therefore, when the movement velocity of the grinding tool is faster, the grinding amount at the position is smaller. Moreover, when the pressing force acting on the target material 80 from the grinding tool is smaller, the grinding amount at the position is smaller. The control device 12 can control the grinding amount at each position by controlling at least one of the movement velocity or pressing force of the grinding tool at the position. By controlling at least one of the movement velocity or pressing force of the grinding tool so that the grinding amount will change smoothly, the control device 12 can reduce steps in the ground part.

The trajectory may include information specifying the posture of the grinding wheel 22 at each position on the movement path of the processing reference point 24. The posture of the grinding wheel 22 may be represented as the angle of the grinding wheel 22 with respect to a tangent to the trajectory at each position.

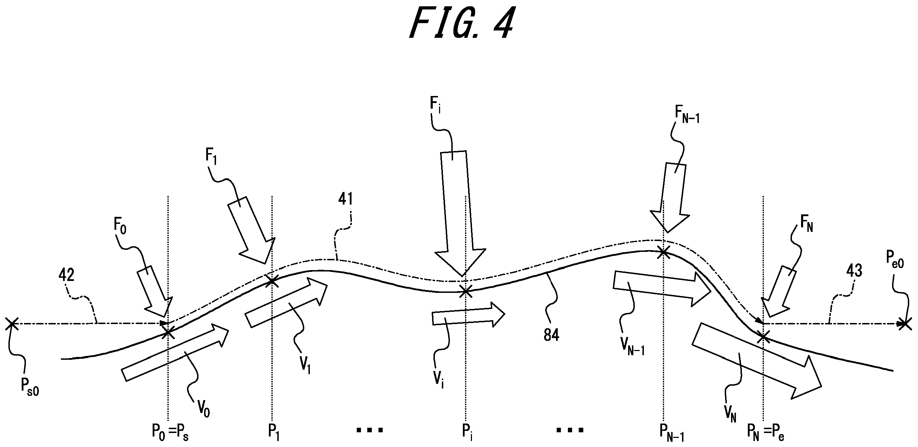

The control device 12 may generate the movement path of the processing reference point 24 so as to include a path 41 along a grinding surface 84, as illustrated in FIG. 4. The grinding surface 84 is assumed to be part of the surface of the target material 80. In FIG. 4, the solid line representing the grinding surface 84 corresponds to the line where a cross section including the feed direction of the grinding tool intersects with the grinding surface 84. The cross section including the feed direction of the grinding tool may be a plane or a curved surface. If the cross section including the feed direction of the grinding tool is a plane, the path 41 is represented as a two-dimensional curve. If the cross section including the feed direction of the grinding tool is a curved surface, the path 41 is represented as a three-dimensional curve.

The path 41 is represented as a line connecting $P(t)$, which is the position of the processing reference point 24 at time t. The time when the processing reference point 24 comes into contact with the grinding surface 84 and grinding starts is denoted by $t_0$. The position $P(t_0)$ of the processing reference point 24 at time $t_0$ is denoted by $P_0$. The time when the processing reference point 24 leaves the grinding surface 84 and grinding ends is denoted by $t_N$. The position $P(t_N)$ of the processing reference point 24 at time $t_N$ is denoted by $P_N$. Each time between time $t_0$ and time $t_N$ is denoted by $t_1$ to $t_{N-1}$. The positions $P(t_1)$ to $P(t_{N-1})$ of the processing reference point 24 at times $t_1$ to $t_{N-1}$ are denoted by $P_1$ to $P_{N-1}$ respectively. The position $P(t_i)$ of the processing reference point 24 at any time $t_i$ from time $t_1$ to time $t_{N-1}$ is denoted by $P_i$.

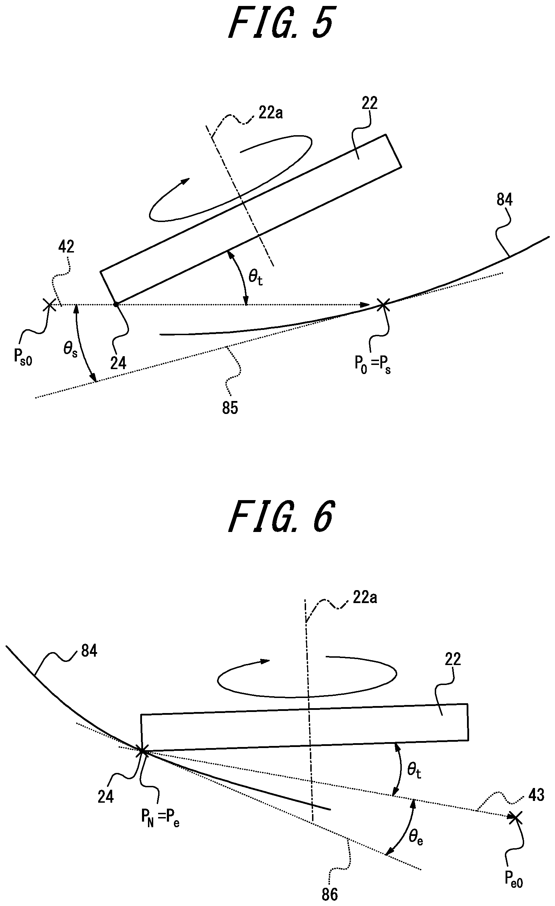

The control device 12 may generate the trajectory so that the movement path of the processing reference point 24 will include a path 42 along which the processing reference point 24 moves until it comes into contact with the grinding surface 84 of the target material 80 before grinding starts. The control device 12 may generate the path 42 so that the processing reference point 24 will approach along a line that forms an angle $\theta_s$ with respect to a tangent 85 to the grinding surface 84 at $P_0$ which is the point where the processing reference point 24 starts to contact the grinding surface 84, as illustrated in FIG. 5. $\theta_s$ is also referred to as an angle of approach, and may be set to 0 degrees or more and 30 degrees or less. As a result of $\theta_s$ being set to 30 degrees or less, steps are less likely to remain on the surface of the target material 80 after grinding.

The start point of the path 42 is represented as an approach start point $P_{s0}$ where the grinding tool starts to approach. The end point of the path 42 is $P_0$ which is the point where the processing reference point 24 starts to contact the grinding surface 84, and is also represented as a grinding start point $P_s$. The distance between the approach start point $P_{s0}$ and the grinding start point $P_s$ may be set as appropriate so as to prevent unintentional contact between the target material 80 and the grinding wheel 22. The feed velocity of the grinding tool when the processing reference point 24 moves from the approach start point $P_{s0}$ to the grinding start point $P_s$ is represented as an approach velocity $V_s$.

The control device 12 may generate the trajectory so as to specify the posture of the grinding wheel 22. The posture of the grinding wheel 22 may be specified by the angle between a plane perpendicular to the rotation axis 22a of the grinding wheel 22 and the traveling direction of the grinding wheel 22. The angle between the plane perpendicular to the rotation axis 22a of the grinding wheel 22 and the traveling direction of the grinding wheel 22 is denoted by $\theta_t$ in FIG. 5. The control device 12 generates the trajectory so as to maintain the angle $\theta_t$ of the grinding wheel 22 at the same value even after the processing reference point 24 enters the path 41. The control device 12 may generate the trajectory so as to change the angle $\theta_t$ of the grinding wheel 22 at each point on the path 41.

The control device 12 may generate the trajectory so that the movement path of the processing reference point 24 will include a path 43 along which the processing reference point 24 moves when leaving the grinding surface 84 of the target material 80 after grinding ends. The control device 12 may generate the path 43 so that the processing reference point 24 will leave the grinding surface 84 along a line that forms an angle $\theta_e$ with respect to a tangent 86 at $P_N$ which is the point where the processing reference point 24 starts to leave the grinding surface 84, as illustrated in FIG. 6. $\theta_s$ is also referred to as an angle of departure, and may be set to 20 degrees or more.

The start point of the path 43 is the end point $P_N$ of the path 41 along which the grinding surface 84 is ground, and is also represented as a grinding end point $P_e$ where the grinding tool starts to leave (i.e. depart from) the grinding surface 84. The end point of the path 43 is the point where the departure of the grinding tool ends, and is denoted by $P_{e0}$. The distance between the grinding end point $P_e$ and the departure end point $P_{e0}$ may be set as appropriate so as to prevent unintentional contact between the target material 80 and the grinding wheel 22. The feed velocity of the grinding tool when the processing reference point 24 moves from the grinding end point $P_e$ to the departure end point $P_{e0}$ is represented as a departure velocity $V_e$.

The posture of the grinding wheel 22 when the grinding tool leaves the grinding surface 84 may be specified by the angle between a plane perpendicular to the rotation axis 22a of the grinding wheel 22 and the traveling direction of the grinding wheel 22. The angle between the plane perpendicular to the rotation axis 22a of the grinding wheel 22 and the traveling direction of the grinding wheel 22 is denoted by $\theta_t$ in FIG. 6. The angle when the grinding wheel 22 leaves the grinding surface 84 may be the same as or different from the angle when the grinding wheel 22 approaches the grinding surface 84.

The control device 12 specifies the movement velocity of the processing reference point 24 of the grinding wheel 22 at each time so as to move the processing reference point 24 along the path 41. The control device 12 generates the trajectory so as to include information of the movement velocity of the processing reference point 24 at each time. The movement velocity of the processing reference point 24 is also referred to as a grinding velocity. In FIG. 4, the magnitudes of the grinding velocities at times $t_0$ to $t_N$ are denoted by $V_0$ to $V_N$ respectively. In other words, the magnitudes of the grinding velocities at positions $P_0$ to $P_N$ are denoted by $V_0$ to $V_N$ respectively. The direction of the grinding velocity at each of positions $P_0$ to $P_N$ coincides with the tangential direction of the grinding surface 84 at the position.

The control device 12 generates the trajectory so as to include information specifying the pressing force acting on the grinding surface 84 from the grinding wheel 22 at the processing reference point 24 at each time (at each position). The pressing force acting on the grinding surface 84 from the grinding wheel 22 at the processing reference point 24 is also referred to as a grinding pressing force. The magnitudes of the grinding pressing forces at times $t_0$ to $t_N$ are denoted by $F_0$ to $F_N$ respectively. In other words, the magnitudes of the grinding pressing forces at positions $P_0$ to $P_N$ are denoted by $F_0$ to $F_N$ respectively. The direction of the grinding pressing force at each of positions $P_0$ to $P_N$ coincides with the normal direction of the grinding surface 84 at the position.

The control device 12 operates the grinding device 10 based on the generated trajectory. The control device 12 measures, by the pressing force measurement device 14, the grinding pressing force acting on the target material 80 from the grinding wheel 22 when the grinding wheel 22 contacts the target material 80 to grind out and remove the removal target 82. The control device 12 operates the grinding device 10 so that the measured value of the grinding pressing force by the pressing force measurement device 14 will approach the grinding pressing force at each position specified by the trajectory. Specifically, the control device 12 operates the grinding device 10 to move the grinding wheel 22 away from the surface of the target material 80 if the measured value of the grinding pressing force is greater than the grinding pressing force specified by the trajectory. The control device 12 operates the grinding device 10 to press the grinding wheel 22 against the surface of the target material 80 if the measured value of the grinding pressing force is less than the grinding pressing force specified by the trajectory.

The shape measurement device 32 measures the shape of the ground target material 80 after grinding for a predetermined time or after grinding by a predetermined grinding amount. The removal target recognition device 30 recognizes the removal target 82 based on the data of the three-dimensional shape of the surface of the ground target material 80. The control device 12 determines whether the removal of the removal target 82 is completed or the removal target 82 still remains, based on the recognition result of the removal target 82. If the removal target 82 still remains, the control device 12 repeats grinding by generating a trajectory based on the data of the three-dimensional shape of the surface of the target material 80 and operating the grinding device 10 again. If the removal of the removal target 82 is completed, the control device 12 ends grinding.

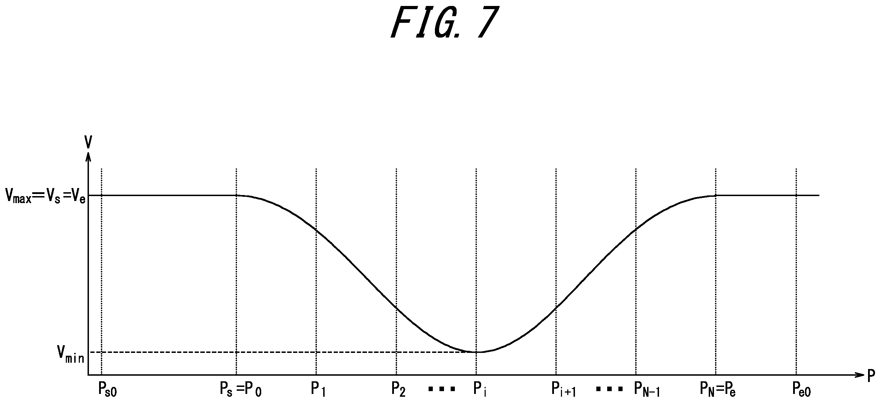

The control device 12 may set the magnitude of each of the grinding velocities $V_0$ to $V_N$ to a larger value near the start point or end point of the path 41 and to a smaller value near the center of the path 41, as indicated by the lengths of the arrows in FIG. 4. The control device 12 may change the grinding velocity at each position as illustrated in the graph in FIG. 7, for example. In the graph in FIG. 7, the horizontal axis represents the positions $P_0$ to $P_N$ on the path 41 as well as the approach start point $P_{s0}$ and the departure end point $P_{e0}$, and the vertical axis represents the grinding velocity V. In the graph in FIG. 7, the grinding velocity V is set so that grinding velocity $V_i$ at position $P_i$ will be minimum value $V_{min}$.

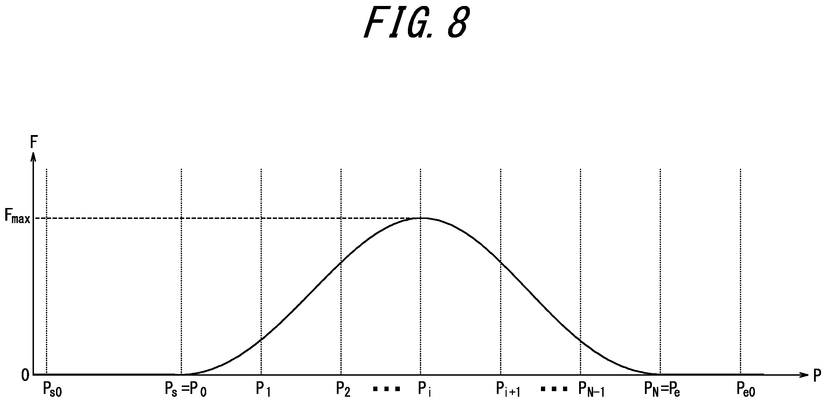

The control device 12 may set the magnitude of each of the grinding pressing forces $F_0$ to $F_N$ to a smaller value near the start point or end point of the path 41 and to a larger value near the center of the path 41, as indicated by the lengths of the arrows in FIG. 4. The control device 12 may change the grinding pressing force at each position as illustrated in the graph in FIG. 8, for example. In the graph in FIG. 8, the horizontal axis represents the positions $P_0$ to $P_N$ on the path 41 as well as the approach start point $P_{s0}$ and the departure end point $P_{e0}$, and the vertical axis represents the grinding pressing force F. In the graph in FIG. 8, the grinding pressing force F is set so that grinding pressing force $F_i$ at position $P_i$ will be maximum value $F_{max}$. The position where the grinding velocity is the minimum value and the position where the grinding pressing force is the maximum value may be the same or different.

As a result of the control device 12 operating the grinding device 10 using such a trajectory that sets the grinding velocity and grinding pressing force as described above, the steps that occur at the boundaries between the ground parts subjected to grinding and the unground parts not subjected to grinding can be reduced. The control device 12 may generate the trajectory so as to continuously change the posture, grinding velocity, or grinding pressing force of the grinding wheel 22 while moving the grinding wheel 22 along the path 41. As a result of the control device 12 operating the grinding device 10 using the trajectory generated in this way, the steps that occur at the boundaries between the ground and unground parts can be minimized while removing the removal target 82.

The graph of the grinding velocity V illustrated in FIG. 7 may be a graph of a quartic formula at position P, represented by the following formula (1).

[Math. 1]

$$V(P) = a_{v1}(P(t) - a_{v2})^4 + b_{v1}(P(t) - b_{v2})^3 + c_{v1}(P(t) - c_{v2})^2 + d_{v1}(P(t) - d_{v2}) + e_v \quad (1)$$

The coefficients in formula (1) may be set to values within the ranges specified by the following inequalities, for example.

$$10000V_{min} \leq a_{v1} \leq 0$$

$$(P_e - P_s)/2 \leq a_{v2} \leq (P_e - P_s)/2$$

$$10000V_{min} \leq b_{v1} \leq 10000V_{min}$$

$$(P_e - P_s)/2 \leq b_{v2} \leq (P_e - P_s)/2$$

$$0 \leq c_{v1} \leq 10000V_{min}$$

$$(P_e - P_s)/2 \leq c_{v2} \leq (P_e - P_s)/2$$

$$10000V_{min} \leq d_{v1} \leq 10000V_{min}$$

$$(P_e - P_s)/2 \leq d_{v2} \leq (P_e - P_s)/2$$

$$e_v = V_{min}$$

The graph of the grinding pressing force F illustrated in FIG. 8 may be a graph of a quartic formula at position P, represented by the following formula (2).

[Math. 2]

$$F(P) = a_{f1}(P(t) - a_{f2})^4 + b_{f1}(P(t) - b_{f2})^3 + c_{f1}(P(t) - c_{f2})^2 + d_{f1}(P(t) - d_{f2}) + e_f \quad (2)$$

The coefficients in formula (2) may be set to values within the ranges specified by the following inequalities, for example.

$$0 \le a_{f1} \le 10000F_{max}$$

$$(P_e - P_s)/2 \le a_{f2} \le (P_e - P_s)/2$$

$$10000F_{max} \le b_{f1} \le 10000F_{max}$$

$$(P_e - P_s)/2 \le b_{f2} \le (P_e - P_s)/2$$

$$0 \le c_{f1} \le 10000F_{max}$$

$$(P_e - P_s)/2 \le c_{f2} \le (P_e - P_s)/2$$

$$10000F_{max} \le d_{f1} \le 10000F_{max}$$

$$(P_e - P_s)/2 \le d_{f2} \le (P_e - P_s)/2$$

$$e_f = F_{max}$$

As shown in formulas (1) and (2) as an example, by representing each of the grinding velocity and the grinding pressing force by a quartic formula at position P, the control device 12 can set nine parameters in the formula. Thus, the control device 12 can finely set the target values of the grinding velocity and the grinding pressing force according to the grinding conditions. Moreover, by representing each of the grinding velocity and the grinding pressing force by a quartic formula at position P, the control device 12 can set the path 41 of the grinding tool as a smooth and continuous straight line or curve. In addition, changing the grinding velocity smoothly and continuously from the approach velocity $V_s$ to grinding velocity V(P) of the grinding tool at the grinding start point $P_s$ can reduce the step at the boundary between the ground and unground parts. Furthermore, changing the grinding velocity smoothly and continuously from the grinding velocity V(P) to departure velocity $V_e$ of the grinding tool at the grinding end point $P_e$ can reduce the step at the boundary between the ground and unground parts.

The control device 12 may set the following formula (3) as a formula representing the grinding velocity V. [Math. 3]

$$V(P) = a_{v1}sin\left(\frac{P(t)}{P_e - P_s}\pi\right) + b_{v1} \qquad (3)$$

The coefficients in formula (3) may be set to values within the ranges specified by the following inequalities, for example.

$$10000V_{min} \le a_{v1} \le 0, \ b_{v1} = V_{min} + a_{v1}$$

The control device 12 may set the following formula (4) as a formula representing the grinding pressing force F. [Math. 4]

$$F(P) = a_{f1} sin\left(\frac{P(t)}{P_e - P_s}\pi\right) + b_{f1} \qquad (4)$$

The coefficients in formula (4) may be set to values within the ranges specified by the following inequalities, for example.

$$0 \le a_{f1} \le F_{max}, \ b_{f1} = F_{max} + a_{f1}$$

As shown in formulas (3) and (4) as an example, by representing each of the grinding velocity and the grinding pressing force by a sine function with position P as a parameter, the control device 12 can set the path 41 of the grinding tool as a smooth and continuous straight line or curve. In addition, changing the grinding velocity smoothly and continuously at the grinding start point $P_s$ and the grinding end point $P_e$ can reduce the steps at the boundaries between the ground and unground parts.

The control device 12 may represent the grinding velocity by a formula including at least one of a quartic formula at position P or a sine function with position P as a parameter. The control device 12 may represent the grinding pressing force by a formula including at least one of a quartic formula at position P or a sine function with position P as a parameter. The control device 12 may represent the grinding velocity or the grinding pressing force by a formula at least part of which includes a formula of any of various other smooth and continuous functions such as a Gaussian distribution formula.

V(P) which is the function representing the grinding velocity is also referred to as a velocity function. F(P) which is the function representing the grinding pressing force is also referred to as a pressing force function. The control device 12 may generate the trajectory so that the absolute value, at the position P of the grinding tool, of a function obtained by first-order differentiation of the velocity function will be less than a velocity first-order differentiation threshold. In this way, a sudden change in the grinding velocity is avoided. The control device 12 may generate the trajectory so that the absolute value, at the position P of the grinding tool, of a function obtained by first-order differentiation of the pressing force function will be less than a pressing force first-order differentiation threshold. In this way, a sudden change in the grinding pressing force is avoided. By avoiding a sudden change in each of the grinding velocity and the grinding pressing force, the steps in the surface shape of the target material 80 after grinding can be reduced.

The control device 12 may generate the trajectory so that a function obtained by second-order differentiation of the velocity function at the position P of the grinding tool and a function obtained by second-order differentiation of the pressing force function at the position P of the grinding tool will be continuous functions. Thus, the grinding velocity and the grinding pressing force change smoothly. As a result, the steps in the surface shape of the target material 80 after grinding can be reduced. The control device 12 may generate the trajectory so that the absolute value, at the position P of the grinding tool, of a function obtained by second-order differentiation of the velocity function will be less than a velocity second-order differentiation threshold. In this way, the curvature at the minimum value of the graph of the grinding velocity is reduced. The control device 12 may generate the trajectory so that the absolute value, at the position P of the grinding tool, of a function obtained by second-order differentiation of the pressing force function will be less than a pressing force second-order differentiation threshold. In this way, the curvature at the maximum value of the graph of the grinding pressing force is reduced. By reducing the curvature of each of the graph of the grinding velocity and the graph of the grinding pressing force, the ground part of the target material 80 can be prevented from being suddenly deeper.

The control device 12 may generate the trajectory so that the velocity function will have the minimum value at at least one position and the pressing force function will have the maximum value at at least one position. Thus, the grinding velocity and the grinding pressing force do not change monotonically. As a result, the step is reduced at each of the start and end of grinding.

At least part of the velocity function and the pressing force function may be represented by an even function whose origin is a position included in the range in which the target material 80 is ground. For example, in the graph in FIG. 7, the graph of the velocity function V(P) is symmetrical with position $P_i$ included in the range in which the target material 80 is ground as the axis of symmetry. Thus, the velocity function V(P) in the graph in FIG. 7 is an even function with $P_i$ as the origin. In the graph in FIG. 8, the graph of the pressing force function F(P) is symmetrical with position $P_i$ included in the range in which the target material 80 is ground as the axis of symmetry. Thus, the pressing force function F(P) in the graph in FIG. 8 is an even function with $P_i$ as the origin. As a result of at least part of the velocity function and the pressing force function being an even function, the shapes at the start and end of grinding are symmetrical. This improves the quality of the ground part.

<Flowchart>

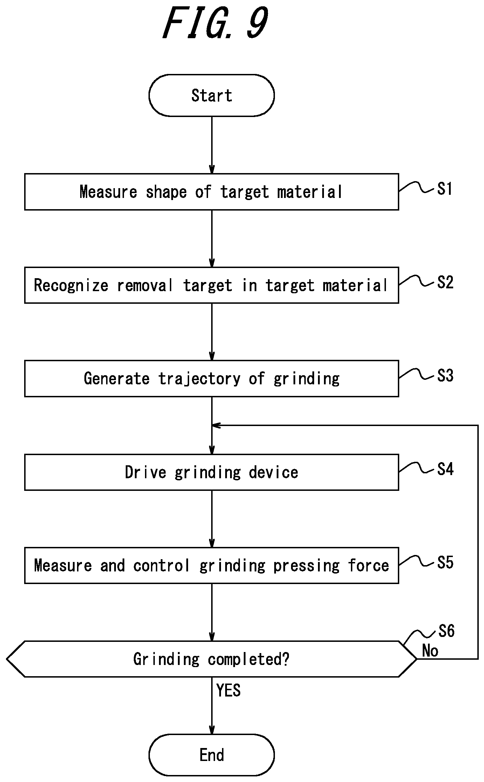

The grinding system 1 may execute a product manufacturing method including the procedure of the flowchart illustrated in FIG. 9 as an example. The product manufacturing method may include a trajectory generation method by which the control device 12 in the grinding system 1 generates a trajectory of grinding. The product manufacturing method or trajectory generation method may be implemented as a product manufacturing program or trajectory generation program executed by a processor included in, for example, the control device 12 in the grinding system 1. The product manufacturing program or trajectory generation program may be stored in a non-transitory computer-readable medium.

The shape measurement device 32 measures the shape of the target material 80 to be ground (step S1). The removal target recognition device 30 recognizes the removal target 82 contained in the target material 80 based on the shape data of the target material 80 (step S2).

The control device 12 generates a trajectory of grinding by the grinding device 10 based on the measurement data of the shape of the target material 80 and the recognition result of the removal target 82 (step S3). The control device 12 drives the grinding device 10 based on the generated trajectory (step S4). The control device 12 acquires the measurement result of the grinding pressing force from the pressing force measurement device 14, and controls the grinding device 10 so that the measured value of the grinding pressing force will approach the grinding pressing force specified by the trajectory (step S5). The control device 12 determines whether grinding is completed (step S6). For example, the control device 12 may determine that grinding is completed when the grinding device 10 is moved to the departure end point $P_{e0}$. If grinding is not yet completed (step S6: NO), the control device 12 returns to step S4 and continues driving the grinding device 10 until grinding is completed. If grinding is completed (step S6: YES), the control device 12 ends the procedure of the flowchart in FIG. 9. As the product manufacturing method, the grinding system 1 may further execute a step of inspecting whether the removal target 82 is successfully removed after completion of grinding. The trajectory generation method in the product manufacturing method may include the procedure of steps S1 to S3 in FIG. 9.

In the procedure of the flowchart in FIG. 9, the procedure of steps S1 to S3 is to generate a trajectory. The grinding system 1 may execute a procedure including steps S1 to S3 as the trajectory generation method.

As described above, with the grinding system 1 and grinding method according to the present disclosure, as a result of operating the grinding device 10 using such a trajectory that sets the grinding velocity and grinding pressing force as described above, the steps that occur at the boundaries between the ground and unground parts are reduced. The control device 12 may generate the trajectory so as to continuously change the posture, grinding velocity, or grinding pressing force of the grinding wheel 22 while moving the grinding wheel 22 along the path 41. As a result of the control device 12 operating the grinding device 10 using the trajectory generated in this way, the steps that occur at the boundaries between the ground and unground parts can be minimized while removing the removal target 82.

EXAMPLES

In an example, the control device 12 generates a trajectory with the grinding velocity set using formula (1) and the grinding pressing force set using formula (2). The control device 12 sets the coefficients in formulas (1) and (2) to the following values. These coefficients may be changed as appropriate depending on the size of the removal target 82, the material property of the target material 80 to be ground, etc. In the example, the coefficients are set so that the grinding velocity V will be the slowest and the grinding pressing force F will be the largest near the center of the path 41 along which the removal target 82 is ground out.

$$a_{v1} = -2000, \ a_{v2} = (P_e - P_s)/2$$

$$b_{v1} = 0, \ b_{v2} = -(P_e - P_s)/2$$

$$c_{v1} = 1000, \ c_{v2} = -(P_e - P_s)/2$$

$$d_{v1} = 0, \ d_{v2} = -(P_e - P_s)/2$$

$$e_v = V_{min} = 10$$

$$a_{f1} = 1800, \ a_{f2} = -(P_e - P_s)/2$$

$$b_{f1} = 0, \; b_{f2} = (P_e - P_s)/2$$

$$c_{f1} = -900, \; c_{f2} = (P_e - P_s)/2$$

$$d_{f1} = 0, \; d_{f2} = (P_e - P_s)/2$$

$$e_f = F_{max} = 150$$

Moreover, formulas (1) and (2) are set to satisfy the following boundary conditions at the grinding start point $P_s$ and the grinding end point $P_e$.

$$V(P_s)/\partial P = 0, \; V(P_e)/\partial P = 0$$

$$F(P_s)/\partial P = 0, \; F(P_e)/\partial P = 0$$

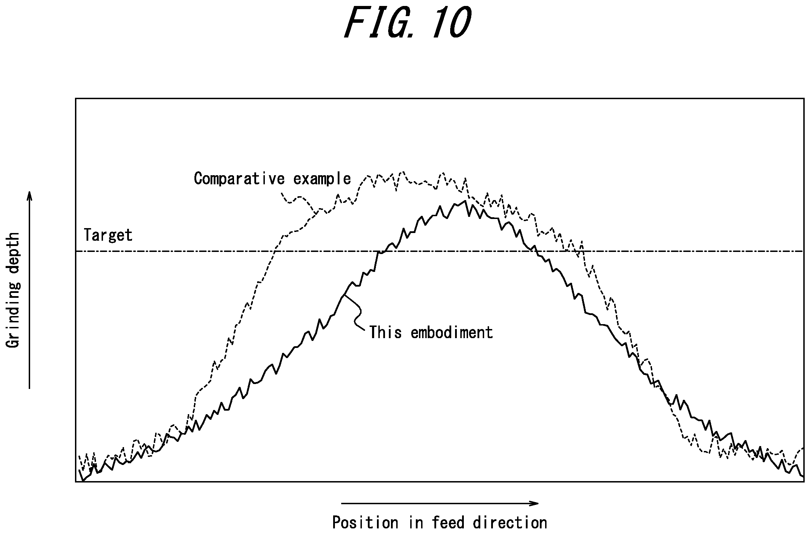

The results of measuring, as the grinding depth, the surface shape of the ground target material 80 in the case of grinding the target material 80 under the foregoing conditions are indicated by the solid line graph in FIG. 10. In the graph in FIG. 10, the horizontal axis represents the position of the grinding tool in the feed direction, and the vertical axis represents the grinding depth at each position. In this embodiment, the grinding depth changes smoothly and gently with the change in the position in the feed direction. Such smooth and gentle change in the grinding depth contributes to reduction of steps. In addition, the grinding depth exceeds the target value. This makes regrinding unnecessary.

As a comparative example, consider a method of grinding without changing the grinding velocity and the grinding pressing force. The results of measuring, as the grinding depth, the surface shape of the target material ground by the method according to the comparative example are indicated by the dashed line graph in FIG. 10. In the results of grinding by the method according to the comparative example, there are parts where the grinding depth changes abruptly with the change in the position in the feed direction, particularly near the grinding start point and the grinding end point. Such abruptly changing parts are determined as steps by sensory inspection with the inspector's sense of touch, etc. Regrinding is necessary for the parts determined as steps.

As described above, with the grinding method according to this embodiment, the quality of ground parts is improved and the rate at which regrinding of ground parts is required is reduced as compared with the method according to the comparative example. Specifically, under the conditions of the foregoing example, the rate at which regrinding was required decreased by about 90 %. As a result, the total grinding work by the grinding device 10 was reduced by about 40 %.

Although the embodiment of the present disclosure has been described by way of the drawings and examples, various changes and modifications may be made by those of ordinary skill in the art based on the present disclosure. Such various changes and modifications are therefore included in the scope of the present disclosure. For example, the functions included in the components, steps, etc. may be rearranged without logical inconsistency, and a plurality of components, steps, etc. may be combined into one component, step, etc. and a component, step, etc. may be divided into a plurality of components, steps, etc. The embodiment of the present disclosure may also be implemented as a program executed by a processor included in the device or a storage medium storing the program. These are also encompassed within the scope of the present disclosure.

REFERENCE SIGNS LIST

1 grinding system
10 grinding device
12 control device
14 pressing force measurement device 20 grinder
22 grinding wheel (22a: rotation axis, 24: processing reference point)
30 removal target recognition device
32 shape measurement device
41, 42, 43 path

80 target material (82: removal target, 84: grinding surface, 85, 86: tangent)

**Claims**

1. A grinding system comprising:

   a grinding device including a grinding tool configured to grind a target material;
   a pressing force measurement device configured to measure a grinding pressing force acting on the target material from the grinding tool; and
   a control device configured to generate, based on a three-dimensional shape of a surface of the target material and a position and shape of a removal target in the target material, a trajectory of the grinding tool for grinding out the removal target, and control the grinding device to move the grinding tool based on the trajectory,
   wherein the control device is configured to generate the trajectory so that at least one of a movement velocity of the grinding tool relative to the target material or the grinding pressing force will change depending on a position of the grinding tool.

2. The grinding system according to claim 1, wherein the control device is configured to generate the trajectory so that both the movement velocity of the grinding tool relative to the target material and the grinding pressing force will change depending on the position of the grinding tool.

3. The grinding system according to claim 2, wherein the control device is configured to generate the trajectory so that an angle of approach when the grinding tool comes into contact with the target material will be 30 degrees or less with respect to a tangent to the target material.

4. The grinding system according to any one of claims 1 to 3, wherein the control device is configured to generate the trajectory so that an absolute value, at the position of the grinding tool, of a function obtained by first-order differentiation of a velocity function will be less than a velocity first-order differentiation threshold and an absolute value, at the position of the grinding tool, of a function obtained by first-order differentiation of a pressing force function will be less than a pressing force first-order differentiation threshold, the velocity function representing the movement velocity of the grinding tool with the position of the grinding tool as a parameter, and the pressing force function representing the grinding pressing force with the position of the grinding tool as a parameter.

5. The grinding system according to claim 4, wherein the control device is configured to generate the trajectory so that the velocity function will have a minimum value at at least one position and the pressing force function will have a maximum value at at least one position.

6. The grinding system according to claim 5, wherein at least part of the velocity function and the pressing force function is represented by an even function whose origin is a position included in a range in which the target material is ground.

7. The grinding system according to claim 6, wherein at least part of the velocity function and the pressing force function is represented by any one of a quartic formula, a sine function, and a Gaussian distribution formula at the position of the grinding tool.

8. A trajectory generation method of generating a trajectory for controlling a grinding tool that grinds a target material, the trajectory generation method comprising:

   measuring a three-dimensional shape of a surface of the target material;
   recognizing a position and shape of a removal target in the target material; and
   generating the trajectory so that at least one of a velocity of the grinding tool relative to the target material or a grinding pressing force acting on the target material from the grinding tool will change depending on a position of the grinding tool, based on the three-dimensional shape of the surface and a posture of the target material and the position and shape of the removal target.

9. A product manufacturing method comprising
   grinding out a removal target in a target material by controlling a grinding tool based on a trajectory generated by executing the trajectory generation method according to claim 8.

# FIG. 1

*FIG. 2*

A

20

22

24

Feed
direction

80

View taken along arrow A

*FIG. 3*

20

80

22

24

**FIG. 4**

## FIG. 5

## FIG. 6

EP 4 599 983 A1

## FIG. 7

## FIG. 8

# FIG. 9

```
                    ┌──────────┐
                    │  Start   │
                    └──────────┘
                         │
                         ▼
   ┌────────────────────────────────────────┐
   │   Measure shape of target material     │───S1
   └────────────────────────────────────────┘
                         │
                         ▼
   ┌────────────────────────────────────────┐
   │ Recognize removal target in target     │───S2
   │ material                               │
   └────────────────────────────────────────┘
                         │
                         ▼
   ┌────────────────────────────────────────┐
   │     Generate trajectory of grinding    │───S3
   └────────────────────────────────────────┘
                         │
                         ▼
   ┌────────────────────────────────────────┐
   │         Drive grinding device          │───S4
   └────────────────────────────────────────┘
                         │
                         ▼
   ┌────────────────────────────────────────┐
   │ Measure and control grinding pressing  │───S5
   │ force                                  │
   └────────────────────────────────────────┘
                         │
                         ▼                  S6
   ◁────────────────────────────────────────▷──┐ No
   ◁           Grinding completed?            ▷
   ◁────────────────────────────────────────▷
                         │ YES
                         ▼
                    ┌──────────┐
                    │   End    │
                    └──────────┘
```

# FIG. 10

Target

Comparative example

This embodiment

Grinding depth

Position in feed direction

## INTERNATIONAL SEARCH REPORT

| International application No. |
| --- |
| **PCT/JP2023/034147** |

**A. CLASSIFICATION OF SUBJECT MATTER**

*B24B 27/033*(2006.01)i; *B24B 27/00*(2006.01)i; *B24B 49/16*(2006.01)i; *B25J 9/10*(2006.01)i; *B25J 13/08*(2006.01)i
FI:   B24B27/033 A; B24B49/16; B25J13/08 Z; B25J9/10 A; B24B27/00 A

According to International Patent Classification (IPC) or to both national classification and IPC

**B. FIELDS SEARCHED**

Minimum documentation searched (classification system followed by classification symbols)
B24B27/033; B24B27/00; B24B49/16; B25J9/10; B25J13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 5-337804 A (HITACHI, LTD.) 21 December 1993 (1993-12-21) paragraphs [0008]-[0027], fig. 1-18 | 1-2, 8-9 |
| Y | | 3 |
| A | | 4-7 |
| Y | JP 8-16225 A (HITACHI, LTD.) 19 January 1996 (1996-01-19) paragraph [0043] | 3 |
| A | WO 2022/079974 A1 (JFE STEEL CORP.) 21 April 2022 (2022-04-21) | 1-9 |
| A | JP 7-60633 A (TOSHIBA CORP.) 07 March 1995 (1995-03-07) | 1-9 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **09 November 2023** | **21 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/034147**

| Patent document cited in search report | | | Publication date (day/month/year) | Patent family member(s) | | | Publication date (day/month/year) |
|---|---|---|---|---|---|---|---|
| JP | 5-337804 | A | 21 December 1993 | US 5331770 A column 3, line 38 to column 10, line 10, fig. 1-18 | | | |
| JP | 8-16225 | A | 19 January 1996 | (Family: none) | | | |
| WO | 2022/079974 | A1 | 21 April 2022 | EP 4194144 A1 CN 116323099 A KR 10-2023-0051579 A | | | |
| JP | 7-60633 | A | 07 March 1995 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7100759 A